# EUROPEAN PATENT SPECIFICATION

(11) **EP 2 041 826 B1**
(45) Date of publication and mention of the grant of the patent: **16.05.2012**
(21) Application number: 07767972.8
(22) Date of filing: 25.06.2007
(51) Int. Cl.: H01M 2/30, H01M 2/20, H01M 10/04, H01M 10/42

(54) **BATTERY ASSEMBLY**
BATTERIEBAUGRUPPE
ENSEMBLE BATTERIE

(30) Priority: 19.07.2006 JP 2006196978
(43) Date of publication of application: 01.04.2009
(73) Proprietor: Toyota Jidosha Kabushiki Kaisha, Toyota-shi, Aichi 471-8571 (JP)
(72) Inventor: NAKAMURA, Yoshiyuki, Toyota-shi, Aichi 471-8571 (JP)
(74) Representative: TBK
(86) International application number: PCT/JP2007/063192
(87) International publication number: WO 2008/010401

(56) References cited:
- US-A- 5 385 793
- US-A1- 2002 195 990
- US-A1- 2004 038 123

## Description

### Technical Field

The present invention relates to a battery assembly formed by stacking a plurality of unit cells.

### Background Art

Conventionally, various types of secondary batteries formed by stacking a plurality of battery cells in series have been proposed, for example, in Japanese Patent Laying-Open Nos. 2000-311718,2004-171954, 2005-011658 US 5 385 793 A and US 2004/038123 A1. Such a secondary battery has collector electrodes provided at opposite ends, and a terminal to be connected to a wire is provided at the collector electrode.

In order to connect a plurality of secondary batteries structured as described above in parallel with each other, a method may be possible to stack the plurality of secondary batteries with an insulating film interposed, so that terminals are connected in parallel with each other.

When the secondary batteries are stacked in the manner mentioned above, however, the terminals of adjacent secondary batteries come close to each other with the insulating film posed therebetween, and hence, the terminals may possibly come into contact with each other. Further, as the insulating film is provided between each of the secondary batteries, the battery assembly becomes thick, requiring much space to install the battery assembly. When a plurality of secondary batteries are connected in parallel with each other, it becomes necessary to connect wires to a plurality of terminals, and when each terminal is to be connected to a wire, routing of wires becomes very complicated.

### Disclosure of the Invention

The present invention was made in view of the foregoing and its object is to provide a battery assembly formed by connecting a plurality of secondary batteries in parallel with each other, ensuring sufficient distance between each of the terminals, allowing formation of a compact battery assembly itself, and allowing connection of wires to the terminals in a simple manner.

According to an aspect, the present invention provides a battery assembly as defined in claim 1. Preferably, the battery assembly includes a plurality of the first and second secondary batteries stacked one after another; a plurality of the first and second collector electrodes; and a plurality of the first and second terminal portions. The first terminal portions overlap with each other in a direction of stacking of the first and second secondary batteries, and the.second terminal portions overlap with each other in the direction of stacking. Preferably, the battery assembly further includes: a first cutout portion formed at the first collector electrode; a second cutout portion formed at the second collector electrode; a first connecting portion formed at the first terminal portion and to be connected to the first conductive member, and a second connecting portion formed at the second terminal portion and to be connected to the second conductive member. The first cutout portion is positioned in the direction of stacking of the second connecting portion and the second cutout portion is positioned in the direction of stacking of the first connecting portion.

In the battery assembly in accordance with the present invention, secondary batteries adjacent to each other in the stacking direction share the first collector electrode. Therefore, total number of terminals can be reduced. Further, as the first terminal portion and the second terminal portion are staggered, wires can be routed easily by connecting the first wire to a portion of the first terminal portion not overlapped with the second terminal portion and by connecting the second wire to a portion of the second terminal portion not overlapping with the first terminal portion. Further, unit cells adjacent to each other in the stacking direction share the collector electrode, and therefore, thickness of the battery assembly can be reduced. Further, as the secondary battery is positioned between each of the terminal portions, contact of terminal portions with each other can be prevented.

### Brief Description of the Drawings

Fig. 1 is a perspective view of the battery assembly in accordance with an embodiment.
Fig. 2 is a cross-sectional view taken along the line II-II of Fig. 1.
Fig. 3 is a perspective view showing a first modification of the battery assembly in accordance with the embodiment.

Fig. 4 is a perspective view of a battery pack formed by housing the battery assembly in, accordance with the embodiment in a casing.

Fig. 5 is a cross-sectional view of a vehicle in which the battery assembly in accordance with the embodiment is installed.

### Best Modes for Carrying Out the Invention

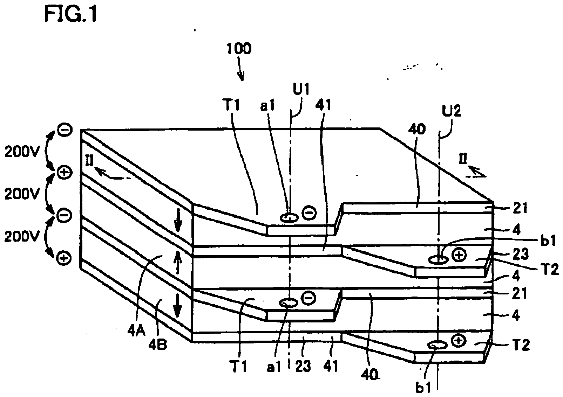

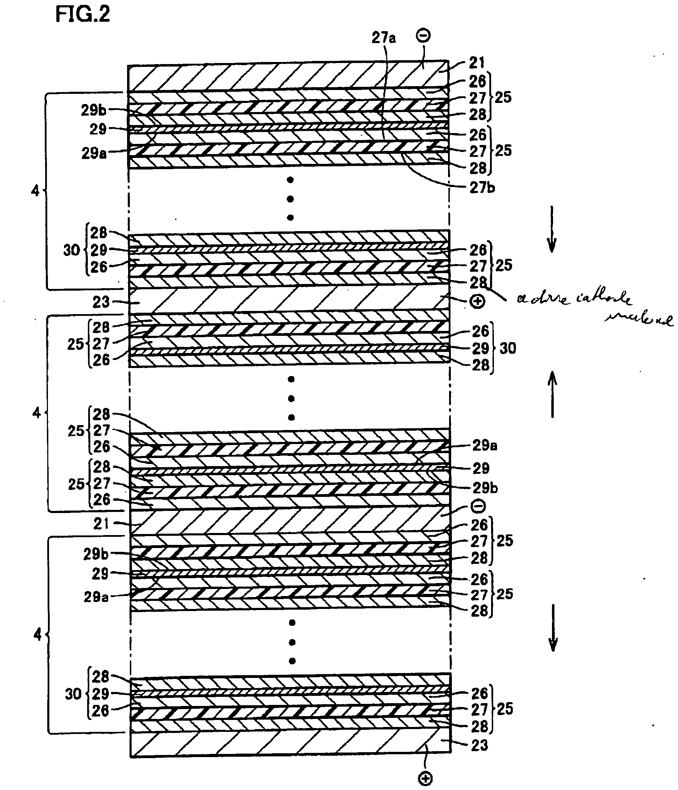

A battery assembly 100 in accordance with Embodiment 1 will be described with reference to Figs. 1 to 5. Fig. 1 is a perspective view of battery assembly 100 in accordance with the embodiment, and Fig. 2 is a cross-sectional view taken along the line II-II of Fig. 1. Referring to Fig. 1, a plurality of bipolar secondary batteries (secondary batteries) 4, a plurality of plate-shaped negative collector electrodes (first collector plates) 21, and a plurality of plate-shaped positive collector electrodes (second collector plates) 23 are stacked to form the assembly.

Referring to Fig. 2, bipolar battery 4 is formed by successively stacking a plurality of electrode sheets (unit cells) 25 and collector foils 29 provided between each of the electrode sheets 25. The direction of stacking each electrode sheet 25 is the same as the direction of stacking bipolar secondary batteries 4, tat is, the thickness direction of battery assembly 100.

Electrode sheet 25 includes an electrolyte layer 27 formed to have a plate-shape, an anode active material layer 26 formed on one main surface (first main surface) 27a of electrolyte layer 27, and a cathode active material layer 28 formed on the other main surface (second main surface) 27b of electrolyte layer 27. Electrode sheets 25 are stacked in series with each other, with a collector foil 29 interposed.

A plurality of bipolar secondary batteries 4 are stacked one after another, with negative collector electrode 21 or positive collector electrode 23 interposed therebetween. Negative and positive collector electrodes 21 and 23 are provided between bipolar secondary batteries 4 and at opposite ends of battery assembly 100.

On a main surface of negative collector electrode 21 provided at one end of battery assembly 100, anode active material layer 26 of bipolar secondary battery 4 neighboring in the stacking direction is formed, and on the main surface of positive collector electrode 23 formed on the other end, cathode active material layer 28 of bipolar secondary battery 4 neighboring in the stacking direction is formed.

Referring to Fig. 1, by way of example, among the plurality of bipolar secondary batteries 4, between a bipolar secondary battery (first secondary battery) 4A and a bipolar secondary battery 4B, negative collector electrode (first collector electrode) 21 is formed. On a surface of a bipolar battery 4A positioned opposite to the surface of bipolar battery 4A having negative collector electrode 21 provided thereon, a positive collector electrode (second collector electrode) 23 is provided.

A neighboring bipolar secondary battery 4 with positive collector electrode 23 interposed is arranged to have cathode active material layers (cathodes) 28 shown in Fig.2 positioned opposite to each other, and on front and rear surfaces of positive collector electrode 23, cathode active material layer 28 of neighboring bipolar secondary battery 4 is connected. Further, a neighboring bipolar secondary battery 4 with negative collector electrode 21 interposed is arranged to have anode active material layers 26 positioned opposite to each other, and on front and rear surfaces of negative collector electrode 21, anode active material layer 26 of neighboring bipolar secondary battery 4 is connected.

Specifically, battery assembly 100 is formed by connecting a plurality of bipolar secondary batteries 4 parallel with each other by negative and positive collector electrodes 21 and 23. Further, bipolar secondary batteries 4 positioned on opposite sides of positive collector electrode 23 or negative collector electrode 21 in the stacking direction share the corresponding positive collector electrode 23 or negative collector electrode 21. Therefore, as compared with a conventional battery assembly formed by stacking a plurality of bipolar secondary batteries one after another with an insulating film interposed, the insulating film becomes unnecessary, and as the neighboring secondary batteries share the collector electrode, battery assembly 100 itself can be made compact.

Referring to Fig. 1, negative collector electrode 21 has a terminal portion T1 to which a wire (first wire) U1 is connected. Terminal portion (first terminal portion) T1 protrudes outward from each bipolar battery 4, and at terminal portion T1, a connection hole (contact portion) al is formed to be in contact with wire U1. Wires U1 and U2 are used for discharging power from battery assembly 100 to the outside or for charging battery assembly 100, and connect, by way of example, battery assembly 100 to a PCU (Power Control Unit).

Further, positive collector electrode 23 also has a terminal portion (second terminal portion) T2 to which a wire (second conducive member) U2 is connected. Wires U1 and U2 are not limited to lead wires and they may be any conductive member such as a metal pin. Terminal portion T2 is formed to protrude outward from an end surface of each bipolar battery 4. At terminal portion T2, a connection hole b1 is formed, to which wire U2 is connected. Between terminal portions T1 and T2, bipolar secondary battery 4 is positioned, and therefore, contact between terminal portions T1 and T2 is prevented.

Further, terminal portions T1 and T2 are arranged staggered in the direction of the main surface of positive collector electrode 23 or negative collector electrode 21.

Therefore, connection hole al can be formed at a position of terminal portion T1 away from terminal portion T2, and connection hole b1 can be formed at a position of terminal portion T2 away from terminal portion T1. Consequently, it becomes possible to connect wires U1 and U2 easily to connection holes al and a2.

Terminal portions T1 are arranged to overlap in the stacking direction, and connection holes a1 formed in terminal portions T1 are also aligned in the stacking direction. Therefore, by inserting wire U1 through each of connection holes al arranged in the stacking direction, all negative collector electrodes 21 can be connected easily.

Further, terminal portions T2 are also arranged to overlap in the stacking direction, and connection holes blare also aligned in the stacking direction. Therefore, by inserting wire U2 through each of connection holes b1 arranged in the stacking direction, all positive collector electrodes 23 can be connected easily.

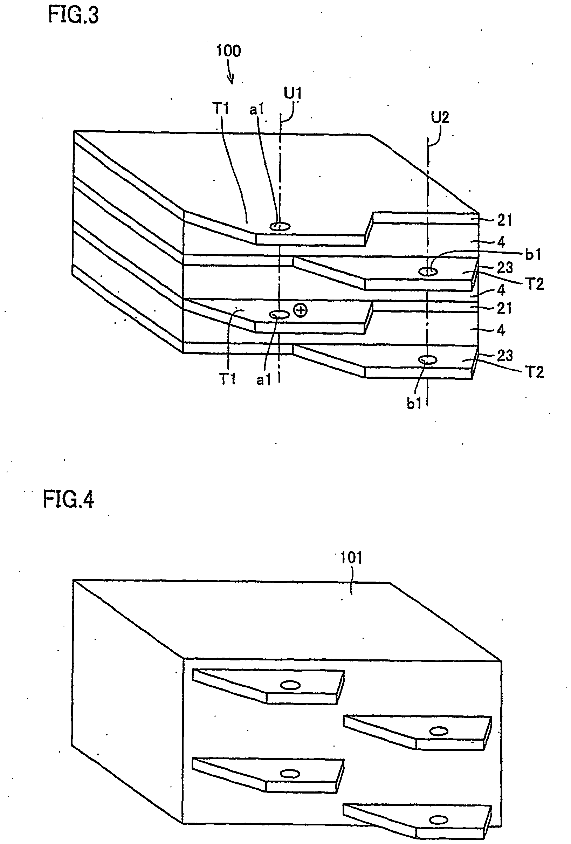

Fig. 3 is a perspective view showing a first modification of battery assembly 100 in accordance with the embodiment. As shown in Fig. 3, that the terminal portions T1 and T2 are staggered in the direction of main surfaces of negative and positive collector electrodes 21 and 23 may include an arrangement in which terminal portions T1 and T2 are partially overlapped in the stacking direction. The terminal portions T1 and T2 may be partially overlapped in the stacking direction, provided that the portion of terminal portion T1 where connection hole al is positioned is spaced apart not to be overlapped with terminal portion T2 and that the portion of terminal portion T2 where connection hole a2 is positioned is spaced apart not to be overlapped with terminal portion T1.

Referring to Fig. 1, of the surfaces surrounding the body of battery assembly 100, terminal portions T1 and T2 are arranged on one side surface, and hence, other member or members may be arranged on other side surfaces of the body of battery assembly 100. Thus, dead space can be reduced. Further, wires U1 and U2 drawn from battery assembly 100 can be taken out from one side surface, and hence, routing of wires U1 and U2 can be facilitated.

Of negative collector electrode 21, at a portion adjacent to terminal portion T1, a cutout portion 40 is formed. In the direction of stacking of cutout portion 40, terminal portion T2 of positive collector electrode 23 is positioned. Of positive collector electrode 23, at a portion adjacent to terminal portion T2, a cutout portion 41 is formed. In the direction of stacking of cutout portion 41, terminal portion T1 of negative collector electrode 21 is positioned. Therefore, even when terminal portion T1 or T2 should bend or curve, contact between terminal portions T1 and T2 can be prevented.

Terminal portion (first terminal portion) T1 is formed integrally with negative collector electrode 21, and terminal portion T2 is formed integrally with positive collector electrode 23.

Terminal portions T1 and T2 are formed integrally with collector electrodes 21 and 23, respectively. Therefore, as compared with formation of terminal portions T1 and T2 separate from negative collector electrode 21 and positive collector electrode 23 and connecting these by solder, higher conductivity can be ensured, and the number of components can be reduced.

Referring to Fig. 2, electrolyte layer 27 forming electrode sheet 25 is a layer of a material having ion conductivity. Electrolyte layer 27 may be a solid electrolyte, or it may be gel electrolyte. By interposing electrolyte layer 27, ion conduction between cathode active material layer 28 and anode active material layer 26 becomes smooth, and the output of bipolar secondary battery 4 can be improved. By collector foil 29 provided on each electrode sheet 25, cathode active material layer 28 formed by sputtering on one main surface 29b of collector foil 29 and anode active material layer 26 formed on the other surface 29b, a bipolar electrode 30 is formed.

Next, each of the members forming bipolar secondary battery 4 will be described in detail. Collector foil 29 is formed, for example, of aluminum. Then, even when the active material layer provided on a surface of collector foil 29 contains solid polymer electrolyte, sufficient mechanical strength of collector foil 29 can be attained. Collector foil 29 may be formed of copper, titanium, nickel, stainless steel (SUS), an alloy of these, or metal other than aluminum having its surface coated with aluminum.

Cathode active material layer 28 includes a cathode active material layer and a solid polymer electrolyte. Cathode active material layer 28 may contain a supporting electrolyte (lithium salt) for improving ion conductivity, a conduction assistant for improving electron conductivity, NMP (N-methyl-2-pyrrolidone) as a solvent for adjusting slurry viscosity, AIBN (azobisisobutyronitrile) as a polymerization initiator or the like.

As the cathode active material, composite oxide of lithium and transition metal generally used in a lithium ion secondary battery may be used. Examples of the cathode active material may include Li/Co based composite oxide such as LiCoO₂, Li/Ni based composite oxide such as LiNiO₂, Li/Mn based composite oxide such as spinel LiMn₂O₄, and Li/Fe based composite material such as LiFeO₂. Other examples are sulfated compound or phosphate compound of lithium and transition metal such as LiFePo_{4,} sulfide or oxide of transition metal such as V₂O₅, MnO₂, TiS₂, MoS₂ and MoO₃; PbO₂, AgO, NiOOH and the like.

The solid polymer electrolyte is not specifically limited and it may be any ion-conducting polymer. For example, polyethylene oxide (PEO), polypropylene oxide (PPO) or copolymer of these may be available. Such a polyalkylene oxide based polymer easily dissolves lithium salt such as LiBF₄, LiPF₆, LiN(SO₂CF₃)₂, or LiN(SO₂C₂F₅)₂. The solid polymer electrolyte is included in at least one of cathode active material layer 28 and anode active material layer 26. More preferably, the solid polymer electrolyte is included both in cathode active material layer 28 and anode active material layer 26.

As the supporting electrolyte, Li(C₂F₅SO₂)₂N, LiBF₄, LiPF₆, LiN(SO₂C₂F₅)₂ or a mixture of these may be used. As the electron conduction assistant, acetylene black, carbon black, graphite or the like may be used.

Anode active material layer 26 includes an anode active material layer and a solid polymer electrolyte. Anode active material layer 26 may contain a supporting electrolyte (lithium salt) for improving ion conductivity, a conduction assistant for improving electron conductivity, NMP (N-methyl-2-pyrrolidone) as a solvent for adjusting slurry viscosity, AIBN (azobisisobutyronitrile) as a polymerization initiator or the like.

As the anode active material layer, a material generally used in a lithium ion secondary battery may be used. If a solid electrolyte is used, however, it is preferred to use a composite oxide of carbon or lithium and metal oxide or metal, as the anode active material layer. More preferably, the anode active material layer is formed of a composite oxide of carbon or lithium and transition metal. Further preferably, the transition metal is titanium. Specifically, it is more preferred that the anode active material layer is of a composite oxide of titanium and lithium or a titanium oxide.

As the solid electrolyte forming electrolyte layer 27, by way of example, a solid polymer electrolyte such as polyethylene oxide (PEO), polypropylene oxide (PPO) or copolymer of these may be used, The solid electrolyte contains supporting electrolyte (lithium salt) for ensuring ion conductivity. As the supporting salt, LiBF₄, LiPF₆, LiN(SO₂CF₃)₂, LiN(SO₂C₂F₅)₂ or a mixture of these may be used.

**Table 1**

| Cathode material | Anode material | Solid electrolyte Remarks | |
|---|---|---|---|
| LiMn₂O₄ | Li metal | P(EO/MEEGE) | · electrolyte salt:LIBF₄ |
| | Li metal | P(EO/PEG-22) | · electrolyte salt:LiN(CF₃SO₂)₂(LiTFSI) |
| LiCoO₂ | carbon | PVd base | |
| LiCoO₂ | Li metal | ether based polymer P(EO/EM/AGE) | · electrolyte salt:LiTFSI ion conducting material binder:mix P(EO/EM)+LiBF₄ to cathode |
| Li_{0.33}MnO₂ | Li metal | P(EO/EM/AGE) | · electrolyte salt:LiTFSI ion conducting material binder:mix PEO-based solid polymer+LiTFSI to cathode |
| Li_{0.33}MnO₂ | Li metal | PEO base+inorganic additive | · electrolyte salt:LiClO₄ ·ion conducting material:mix KB+PEG+LiTFSI to cathode |
| - | - | PEG-PMMA+PEG-borate ester | · electrolyte salt:LiTFSI, BGBLi |
| - | - | PEO base +10mass%0.6Li₂S+0.4SiS₂ | · electrolyte salt:LiCF₃SO₃ |
| - | Li metal | PEO base+ perovskite type La_{0.55}Li_{0.35}ToO₃ | · electrolyte salt:LiCF₃SO₃ |
| Li metal | - | styrene/ethylene oxide-block graft polymer(PSEO) | · electrolyte salt:LiTFSI · ion conducting material:mix KB+PVdF+PEG+LITFSI to cathode |
| LiCoO₂ | Li metal | P(DMS/EO)+polyether cross link | |
| Li_{0.33}MnO₂ | Li metal | prepolymer composition mainly consisting of urethane acrylate (PUA) | · electrolyte salt:LiTFSI · ion conducting material:mix KB+PVdF+PEG+LiTFSI to cathode |
| - | - | multibranched graft polymer (MMA+CMA+POEM) | · electrolyte salt:LiClO₄ |
| LiNi_{0.8}Co_{0.2}O₂ | Li metal | PEO/multibranched polymer/filier based composite solid electrolyte (PEO+HBP+BaTiO₃) | electrolyte salf:LiTFSI · mix SPE+AB to cathode |
| - | - | PME400+group 13 metal alkoxide (as Lewis acid) | · electrolyte salt:LiCl |
| - | - | matrix containing poly (N-methylvinytimidazoline) (PNMVI) | . electrolyte salt:LiClO₄ |
| LiCoO₂ | Li metal | polymerize methoxy polyethylene glycol monomethyl meso acrylate using ruthenium complex by living radical polymerization, further polymerize with styrene - | · electrolyte salt:LiClO₄ · cathode conducting material KB+ binder PVdF |
| LiCoO₂ | Li metal | P(EO/EM)+ether based plasticizer | · electrolyte salt:LiTFSI · cathode conducting material KB+ binder PVdF |

**Table 2**

| Cathode material | Anode material | Solid Electrolyte | Remarks |
|---|---|---|---|
| LiCoO₂ | In | 95(0.6Li₂S·0.4SiS₂)·5Li4SiO₄ (Li₂S-SIS₂ based melt rapid cooled glass) | · state:glass |
| - | - | 70Li₂S·30P₂S₅ Li_{1.4}P_{0.6}S_{2.2} sulfide glass (Li₂S-P₂S₅ based glass ceramics) | · state:glass · forming method:mechanochemical |
| - | - | Li_{0.35}La_{0.55}TiO₃(LLT) (perovskite type structure) | · state:ceramics · form solid electrolyte porous body, fill pores with active material sol |
| - | - | 80Li₂S·20P₂S₅ (Li₂S-P₂S₅ based glass ceramics) | · state:glass · forming method:mechanochemical |
| - | - | xSrTiO₃·(1-x)LiTaO₃ (perovskite type oxide) | · state:ceramics |
| LiCoO₂ | Li-In metal | Li_{3.4}Si_{0.4}P_{0.6}S₄ (thio-LISICON Li ion conductor) | · state:ceramics |
| - | - | (Li_{0.1}La_{0.3})xZr_{y}Nb_{f-y}O₃ (perovskite type oxide) | · state:ceramics |
| - | - | Li₄B₇O₁₂Cl | · state:ceramics · combine PEG as organic compound |
| - | - | Li₄GeS₄-Li₃PS₄ based crystal Li_{3.25}Ge_{0.25}P_{0.75}S₄ (thio-LISICON Li ion conductor) | · state:ceramics |
| - | Li metal In metal | 0.01 Li₃PO₄-0.63Li₂S-0.36SiS₂ (thio-LISICON Li ion conductor) | · state:ceramics |
| LiCoO₂ LiFePO₄ LiMn_{0.6}Fe_{0.4}PO ₄ | Li metal V₂O₅ | Li₃PO₄₋ₓNₓ(LIPON) (lithium phosphate oxinitride glass) | · state:glass |
| LiNi_{0.8}Co_{0.15} Al_{0.05}O₂ | Li metal | Li₃lnBr₃Cl₃ (rock salt type Li ion conductor) | · state: ceramics |
| - | - | 70Li₂S·(30-x)P₂S₅·xP₂O₅ (Li₂S-P₂S₅-P₂O₅ based glass ceramics) | · state:glass |
| LiCoO_{2 etc.} | Li metal Sn based oxide | Li₂O-B₂O₃-P₂O₅ base, Li₂O-V₂O₅-SiO₂ base, Li₂O-TiO₂-P₂O₅ base, LVSO etc. | · state: glass |
| - | - | LiTi₁(PO₃)₄(LTP) (NASICON type structure) | · state:ceramics |

**Table 3**

| Cathode material | Anode material | Polymer base | Remarks |
|---|---|---|---|
| Ni based collector | Li metal | acrylonitrile vinyl acetate (PAN-VAc based gel electrolyte) | · solvent-EC+PC . electrolyte salt:LiBF_{4,} LiPF_{6,} LiN(CF₃SO₂)₂ |
| lithium electrode | lithium electrode | triethylene glycolmethyl methacrylate (polymethyl methacrylate [(PMMA) based gel electrolyte) | · solvent:EC+PC · electrolyte salt:LiBF₄ |
| V₂O₅/PP_{y} composite body | Li metal | methyl methacrylate (PMMA gel electrolyte) | · solvent:EC+DEC · electrolyte salt:LiClO₄ |
| Li metal | U metal | PEO/PS polymer blend gel electrolyte | · solvent:EC+PC . electrolyte salt:LiClO₄ |
| Li metal | Li metal | alkylene oxide based polymer electrolyte | · solvent:PC · electrolyte salt:LiClO₄ |
| Li metal & LiCoO₂ | Li metal | alkylene oxide based polymer electrolyte | · solvent:EC+GBL · electrolyte salt:LiBF₄ |
| Li metal | Li metal | polyolefin based base polymer | · solvent:EC+PC · electrolyte salt:LiBF₄ |
| Li_{0.36}CoO₂ | Li metal | polyvinytideneffuoride (PVdF) + propylene hexafluoride (HFP) (PVdF-HFP gel electrolyte) | · solvent:EC+DMC . electrolyte salt:LiN(CF₃SO₂)₂ |
| LiCoO₂ | Li metal | PEO based and aclyl based polymer | · solvent:EC+PC · electrolyte salt:LiBF₄ |
| Li metal | Li metal | trimethylol propane ethoxylate acrylate (ether based polymer) | · solvent:PC · electrolyte salt:LiBETI,LiBF₄,LiPF₆ |
| - | - | EO-PO copolymer | · electrolyte salt:LiTFSI, LiBF₄, LiPF₆ |
| - | - | poly aziridine compound | · solvent: EC+DEC · electrolyte salt:LIPF₆ |
| - | PAS (polyacene) | PVdF-HFP gel electrolyte | · solvent:PC, EC+DEC · electrolyte salt:LiClO₄, Li(C₂F₅SO₂)₂N |
| - | - | urea based lithium polymer gel electrolyte | · solvent:EC+DMC · electrolyte salt:LiPF₆ |
| - | - | polyether/polyurethane based (PEO-NCO) gel electrolyte | · solvent:PC · electrolyte salt:LiClO₄ |
| - | - | cross-linked polyalkylene oxide based gel polymer electrolyte | |

Specific examples of materials for cathode active material layer 28, anode active material layer 26 and electrolyte layer 27 are listed in Tables 1 to 3. Table 1 shows specific examples when electrolyte layer 27 is of an organic solid electrolyte, Table 2 shows specific examples when electrolyte layer 27 is of an inorganic solid electrolyte, and Table 3 shows specific examples when electrolyte layer 27 is of a gel electrolyte.

It most cases, the electrolyte used in a secondary battery is liquid. By way of example, in a lead storage battery, dilute sulfuric acid is used as the electrolytic solution. Positive collector electrode 23 and negative collector electrode 21 have some degree of strength. In the present embodiment, each of the plurality of bipolar secondary batteries 4 is positioned between positive collector electrode 23 and negative collector electrode 21. When positive collector electrode 23 and negative collector electrode 21 are positioned between bipolar secondary batteries 4, a space between positive collector electrode 23 and bipolar secondary battery 4 or a space between negative collector electrode 21 and bipolar secondary battery 4 can be eliminated. Thus, strength of battery assembly 100 can be ensured.

Fig. 4 is a perspective view of a battery pack 120 having battery assembly 100 in accordance with the present embodiment housed in a casing 101. As shown in Fig. 4, the body of battery assembly 100 is housed in casing 101, while terminal portions T1 and T2 protrude outward from casing 101.

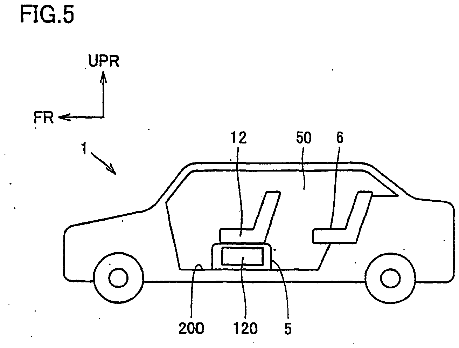

Fig. 5 is a schematic cross-sectional view showing an example of a vehicle in which battery assembly 100 in accordance with the present embodiment is installed.

Referring to Fig. 5, a vehicle 1 is, for example, an electric vehicle using a dischargeable electric power supply as a power source, or a hybrid vehicle using an internal combustion engine such as a gasoline engine or a diesel engine and a dischargeable electric power supply as the power sources. Battery assembly 100 shown in Fig. 1 is installed as a power source of such a vehicle.

In a passenger space (vehicle interior) 50 of vehicle 1, a front seat 12 and a rear seat 6 are arranged. In the passenger space 50, battery pack 120 including battery assembly 100 shown in Fig. 1 is arranged below front seat 12. Battery pack 120 is surrounded by a cover 5 arranged below front seat 12 and a floor 200. It is easier to make a space for housing battery pack 120 below front seat 12, than at other portions of vehicle 1. In most cases, a vehicle body consists of a portion that collapses and a portion that does not collapse but protects an occupant or occupants at the time of a crash. Specifically, by arranging battery pack 120 below front seat 12, it is possible to protect the battery assembly against any shock, if the vehicle body is hard hit.

Although the present invention has been described and illustrated in detail, it is clearly understood that the same is by way of illustration and example only and is not to be taken by way of limitation, the scope of the present invention being limited only by the terms of the appended claims.

### Industrial Applicability

The present invention is suitable for a battery assembly formed by stacking a plurality of secondary batteries formed by stacking unit cells having positive and negative electrodes with a conductive film interposed therebetween.

## Claims

1. A battery assembly (100) formed by stacking a plurality of secondary batteries (4) formed by stacking unit cells (25) having positive and negative electrodes with a conductive layer (29) interposed, comprising:
first and second secondary batteries (4A, 4B) stacked next to each other, among said plurality of secondary batteries (4);
a plate-shaped first collector electrode (21) provided between said first secondary battery (4A) and said second secondary battery (4B), for electrically connecting said first secondary battery (4A) to said second secondary battery (4B);
a plate-shaped second collector electrode (23) of a polarity different from said first collector electrode (21), provided on a surface opposite to a surface of said first secondary battery (4A) on which said first collector electrode is formed;
a first terminal portion (T1) provided at said first collector electrode (21) and to be connected to a first conductive member (U1); and
a second terminal portion (T2) provided at said second collector electrode (23) and to be connected to a second conductive member (U2), wherein
said first and second batteries (4A, 4B) are arranged to have active material layers (26) of the same polarity positioned opposite to each other on main surfaces of said first collector electrode (21), and
said first terminal portion (T1) and said second terminal portion (T2) are arranged staggered on the same side surface of the battery assembly (100) in a direction of main surfaces of said first and second collector electrodes (21, 23).

2. The battery assembly (100) according to claim 1, comprising:
a plurality of said first and second secondary batteries (4A, 4B) stacked one after another;
a plurality of said first and second collector electrodes (21, 23); and
a plurality of said first and second terminal portions (T1, T2),
wherein said first terminal portions (T1) overlap with each other in a direction of stacking of said first and second secondary batteries (4A, 4B), and said second terminal portions (T2) overlap with each other in said direction of stacking.

3. The battery assembly (100) according to claim 2, further comprising:
a first cutout portion (40) formed at said first collector electrode (21);
a second cutout portion (41) formed at said second collector electrode (23);
a first connecting portion (a1) formed at said first terminal portion (T1) and to be connected to said first conductive member (U1); and
a second connecting portion (b1) formed at said second terminal portion (T2) and to be connected to said second conductive member (U2),
wherein said first cutout portion (40) is positioned in said direction of stacking of said second connecting portion (b1) and said second cutout portion (41) is positioned in said direction of stacking of said first connecting portion (a1).

## Patentansprüche

1. Batteriebaugruppe (100), die durch Stapeln einer Vielzahl von Sekundärbatterien (4) ausgebildet ist, die durch Stapeln von positive und negative Elektroden aufweisenden Einheitszellen (25) mit einer dazwischen liegenden leitenden Schicht (29) ausgebildet sind, mit:
nebeneinander gestapelten ersten und zweiten Sekundärbatterien (4A, 4B) unter der Vielzahl von Sekundärbatterien (4);
einer plattenförmigen ersten Sammelelektrode (21), die zwischen der ersten Sekundärbatterie (4A) und der zweiten Sekundärbatterie (4B) vorgesehen ist, um die erste Sekundärbatterie (4A) mit der zweiten Sekundärbatterie (4B) elektrisch zu verbinden;
einer plattenförmigen zweiten Sammelelektrode (23) mit einer anderen Polarität als die erste Sammelelektrode (21), die auf einer Oberfläche vorgesehen ist, die zu einer Oberfläche der ersten Sekundärbatterie (4A), auf der die erste Sammelelektrode ausgebildet ist, entgegengesetzt ist;
einem ersten Anschlussabschnitt (T1), der an der ersten Sammelelektrode (21) vorgesehen ist und mit einem ersten leitenden Bauteil (U1) zu verbinden ist; und
einem zweiten Anschlussabschnitt (T2), der an der zweiten Sammelelektrode (23) vorgesehen ist und mit einem zweiten leitenden Bauteil (U2) zu verbinden ist, wobei
die erste und zweite Batterie (4A, 4B) so angeordnet sind, dass Aktivmaterialschichten (26) der gleichen Polarität einander auf Hauptoberflächen der ersten Sammelelektrode (21) gegenüberliegen, und
der erste Anschlussabschnitt (T1) und der zweite Anschlussabschnitt (T2) auf der gleichen Seitenfläche der Batteriebaugruppe (100) in einer Richtung von Hauptoberflächen der ersten und zweiten Sammelelektroden (21, 23) versetzt angeordnet sind.

2. Batteriebaugruppe (100) nach Anspruch 1, mit:
einer Vielzahl der ersten und zweiten Sekundärbatterien (4A, 4B), die nacheinander gestapelt sind;
einer Vielzahl der ersten und zweiten Sammelelektroden (21, 23); und
einer Vielzahl der ersten und zweiten Anschlussabschnitte (T1, T2),
wobei sich die ersten Anschlussabschnitte (T1) einander in einer Stapelrichtung der ersten und zweiten Sekundärbatterien (4A, 4B) überlappen und sich die zweiten Anschlussabschnitte (T2) einander in der Stapelrichtung überlappen.

3. Batteriebaugruppe (100) nach Anspruch 2, mit außerdem:
einem ersten Ausschnittsabschnitt (40), der an der ersten Sammelelektrode (21) ausgebildet ist;
einem zweiten Ausschnittsabschnitt (41), der an der zweiten Sammelelektrode (23) ausgebildet ist;
einem ersten Verbindungsabschnitt (a1), der am ersten Anschlussabschnitt (T1) ausgebildet ist und mit dem ersten leitenden Bauteil (U1) zu verbinden ist; und
einem zweiten Verbindungsabschnitt (b1), der am zweiten Anschlussabschnitt (T2) ausgebildet ist und mit dem zweiten leitenden Bauteil (U2) zu verbinden ist,
wobei der erste Ausschnittsabschnitt (40) in der Stapelrichtung des zweiten Verbindungsabschnitts (b1) gelegen ist und der zweite Ausschnittsabschnitt (41) in der Stapelrichtung des ersten Verbindungsabschnitts (a1) gelegen ist.

## Revendications

1. Ensemble de batteries (100) formé en empilant une pluralité de batteries secondaires (4) formées en empilant des piles unitaires (25) ayant des électrodes positive et négative avec une couche conductrice (29) intercalée, comprenant
des première et deuxième batteries secondaires (4A, 4B) empilées les unes à côté des autres, parmi ladite pluralité de batteries secondaires (4) ;
une première électrode collectrice en forme de plaque (21) prévue entre ladite première batterie (4A) et ladite deuxième batterie secondaire (4B), pour connecter électriquement ladite première batterie secondaire (4A) à ladite deuxième batterie secondaire (4B) ;
une deuxième électrode collectrice (23) en forme de plaque ayant une polarité différente de ladite première électrode collectrice (21), prévue sur une surface opposée à une surface de ladite première batterie secondaire (4A) sur laquelle ladite première électrode collectrice est formée
une première partie terminale (T1) prévue au niveau de ladite première électrode collectrice (21) et destinée à être connectée à un premier élément conducteur (U1) ; et
une deuxième partie terminale (T2) prévue au niveau de ladite deuxième électrode collectrice (23) et prévue pour être connectée à un deuxième élément conducteur (U2), dans lequel :
lesdites première et deuxième batteries (4A, 4B) sont agencées pour avoir des couches de matériau actives (26) de la même polarité, positionnées à l'opposé l'une de l'autre sur les surfaces principales de ladite première électrode collectrice (21), et
ladite première partie terminale (T1) et ladite deuxième partie terminale (T2) sont agencées en quinconce sur la même surface latérale de l'ensemble de batteries (100) dans une direction des surfaces principales desdites première et deuxième électrodes collectrices (21, 23).

2. Ensemble de batteries (100) selon la revendication 1, comprenant :
une pluralité desdites première et deuxième batteries secondaires (4A, 4B) empilées les unes après les autres ;
une pluralité desdites première et deuxième électrodes collectrices (21, 23) ; et
une pluralité desdites première et deuxième parties terminales (T1, T2),
dans lequel lesdites premières parties terminales (T1) se chevauchent dans une direction d'empilement desdites première et deuxième batteries secondaires (4A, 4B), et lesdites deuxièmes parties terminales (T2) se chevauchent dans ladite direction d'empilement.

3. Ensemble de batteries (100) selon la revendication 2, comprenant en outre :
une première partie découpée (40) formée au niveau de ladite première électrode collectrice (21) ;
une deuxième partie découpée (41) formée au niveau de ladite deuxième électrode collectrice (23) ;
une première partie de connexion (a1) formée au niveau de ladite première partie terminale (T1) et destinée à être connectée audit premier élément conducteur (U1) ; et
une deuxième partie de connexion (b1) formée au niveau de ladite deuxième partie terminale (T2) et destinée à être connectée audit deuxième élément conducteur (U2),
dans lequel ladite première partie découpée (40) est positionnée dans ladite direction d'empilement de ladite deuxième partie de connexion (b1) et ladite deuxième partie
découpée (41) est positionnée dans ladite direction d'empilement de ladite première partie de connexion (a1).
